# EUROPEAN PATENT SPECIFICATION

(11) **EP 0 478 784 B1**
(45) Date of publication and mention of the grant of the patent: **15.11.1995**
(21) Application number: 91905435.3
(22) Date of filing: 05.03.1991
(51) Int. Cl.: C09J 7/04

(54) **CLOTH ADHESIVE TAPE FOR BINDING WIRE HARNESS**
TEXTIL-KLEBEBAND ZUR BINDUNG EINES KABELBAUMS
BANDE ADHESIVE EN TISSU POUR REUNIR DES CABLES EN FAISCEAU

(30) Priority: 12.04.1990 JP 38512/90 U
(43) Date of publication of application: 08.04.1992
(73) Proprietor: SLIONTEC CORPORATION, Kanagawa 214 (JP); SUMITOMO WIRING SYSTEMS, LTD., Yokkaichi City Mie 510 (JP)
(72) Inventor: IWAMARU, Takashi, Sliontec Corporation, Kawasaki-shi, Kanagawa 214 (JP); UCHIDA, Shigeo, Sliontec Corporation, Kawasaki-shi, Kanagawa 214 (JP); FUJITA, Minoru, c/o Hanesu Daisan Sayama Jigyobu, Utsunomiya-shi, Tochigi 321-01 (JP)
(74) Representative: Coleiro, Raymond
(86) International application number: JP9100322
(87) International publication number: WO9116384

(56) References cited:
- EP-A- 0 301 764
- JP-A- 6 071 735
- JP-A- 6 228 436
- JP-A-60 110 776
- JP-A-62 124 178
- DATABASE WPI Week 8804, Derwent Publications Ltd., London, GB; AN 88-023962
- DATABASE WPI Week 8823, Derwent Publications Ltd., London, GB; AN 88-157900
- DATABASE WPI Week 8819, Derwent Publications Ltd., London, GB; AN 88-129622
- DATABASE WPI Week 8809, Derwent Publications Ltd., London, GB; AN 88-058944

## Description

### TECHNICAL FIELD

The present invention relates to an adhesive cloth tape for bundling the insulated conductors of a wiring harness and, more particularly, to an adhesive cloth tape for a wiring harness, having excellent ability to prevent noise generation by the wiring harness as mounted on an automobile and to facilitate wire bundling work (capability of being easily torn off).

### BACKGROUND ART

Most conventional adhesive tapes for bundling the insulated conductors of a wiring harness employ a polyvinyl chloride tape as a base. Recently, demand for the use of adhesive cloth tapes for bundling the insulated conductors of wiring harnesses have progressively increased with a view to improving the comfortableness of automobiles through the reduction of noise generated by the fluttering and rustling of the wiring harness, because the cushioning performance of adhesive cloth tapes is more effective than that of adhesive polyvinyl chloride tapes. Currently used adhesive cloth tapes include adhesive cotton cloth tapes for electrical insulation and adhesive acetate cloth tapes.

Adhesive tapes for wiring harnesses must be flame retardant to secure safety for fire prevention.

### TECHNICAL PROBLEMS

The base cloth of the adhesive cotton cloth tape for electrical insulation among the conventional adhesive cloth tapes, in general, is woven by using warp yarns of 30's and weft yarns of 30's or 36's (yarn count is the length in kilometer of yarn of 1 kg in weight). Although an adhesive cotton cloth tape using such a cotton cloth as a base cloth has excellent ability to prevent noise, its tearing strength is high. Therefore, the adhesive cotton cloth tape is hard to tear as compared with the conventional adhesive polyvinyl chloride tape and reduces remarkably the efficiency of bundling work for bundling the component wires of a wiring harness.

The adhesive acetate cloth tape is easy to tear because the warp yarns of the acetate base cloth have a comparatively low strength. However, since both the warp yarns and the weft yarns of the acetate base cloth are filament yarns, the adhesive acetate cloth tape is inferior to the adhesive cotton cloth tape in cushioning performance, and its noise preventing performance is unsatisfactory.

A method of improving the tearing easiness of the adhesive cotton cloth tape coats the surface of the base cloth with a resin, such as polyethylene. However, the coating of the surface of the base cloth with a resin deteriorates the noise preventing ability of the adhesive cotton cloth tape, because the backside of the adhesive cotton cloth tape is formed of a film, which is similar to the backside of the adhesive polyvinyl chloride tape.

JP-A-63097678 (English-language abstract of which is published under Derwent accession No. 88-157900) discloses an adhesive tape having polyester multifilament warp fibres which are of higher strength than its polyolefin multifilament weft fibres.

As stated above, an adhesive tape for bundling the component wires of a wiring harness, having excellent noise preventing ability and excellent tearing easiness that enables bundling work at a working efficiency corresponding to that at which bundling work can be carried out when the conventional adhesive polyvinyl chloride tape is used has not been available.

Accordingly, it is an object of the present invention to provide an adhesive cloth tape for bundling the component wires of a wiring harness, solving the problems in the prior art, having excellent ability to prevent generation of noise by a wiring harness as mounted on an automobile, and facilitating bundling work in fabricating a wiring harness.

### SUMMARY OF THE INVENTION

The object of the invention can be achieved by an adhesive cloth tape having a tensile strength of 8 kgf/19 mm or higher with respect to the direction of its length for bundling the component wires of a wiring harness, and employing a woven base cloth of a thickness of 0.2 mm or above consisting of yarns having a tensile strength in the range of 80 to 200 gf as warp yarns, and spun yarns or texturized filament yarns having a tensile strength higher than that of the warp yarns as weft yarns.

The base cloth and/or the adhesive is flame retardant.

The base cloth consisting of the warp yarns having a tensile strength in the range of 80 to 200 gf and the weft yarns having a strength higher than that of the warp yarns improves the tearing easiness of the adhesive cloth tape, and the use of the weft yarns having a strength higher than that of the warp yarns prevents the longitudinal tearing of the adhesive cloth tape. The tensile strength of 8 kgf/19 mm or above of the adhesive cloth tape with respect to the direction of the warp yarns is sufficiently high for bundling the component wires of a wiring harness.

The use of spun yarns or texturized filament yarns as the weft yarns secures sufficiently high cushioning ability. The thickness of 0.2 mm or above of the base cloth further improves the cushioning effect.

The back surface of the adhesive tape may be finished by a process for improving the unwinding property of the adhesive tape. Desirably, the back surface of the adhesive tape is coated properly with a release agent, such as silicone, so that the cushioning effect of the base cloth may not be spoiled.

The adhesive cloth tape thus constructed in accordance with the present invention solves the problems in the prior art, has excellent ability to prevent generation of noise by a wiring harness as mounted on an automobile, and facilitates bundling work for bundling the component wires of a wiring harness.

Although the adhesive cloth tape in accordance with the present invention has been described as applied to bundling the component wire of a wiring harness to be used on an automobile, naturally, the adhesive cloth tape in accordance with the present invention is applicable to general wiring harnesses.

### BRIEF DESCRIPTION OF THE DRAWINGS

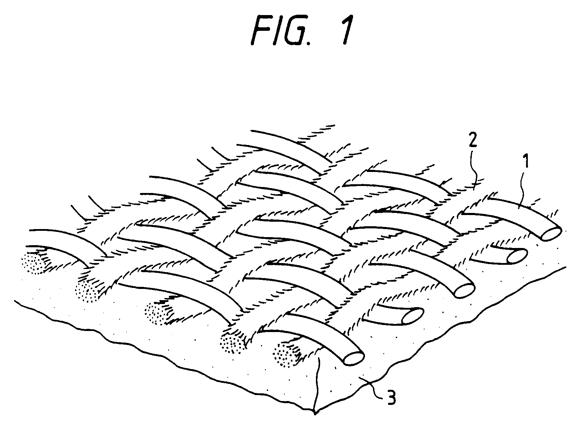

Fig. 1 is an enlarged typical perspective view of an adhesive cloth tape embodying the present invention for bundling the component wires of a wiring harness.
1 Warp yarn
2 Weft yarn
3 Adhesive

### BEST MODE FOR CARRYING OUT THE INVENTION

Examples of adhesive cloth tapes in accordance with the present invention and comparative examples of adhesive cloth tapes will be described hereinafter.

### Example 1

An adhesive cloth tape was fabricated by coating a woven cloth of 0.28 mm in thickness, 68 end/25.4 mm in end spacing and 68 end/25.4 mm in pick spacing with a flame retardant adhesive. The woven fabric consists of 40's cotton yarns of 176 gf in strength as warp yarns and 20's cotton yarns of 343 gf in strength as weft yarns.

### Example 2

An adhesive cloth tape was fabricated by coating a woven cloth of 0.25 mm in thickness, 71 end/25.4 mm in end spacing and 49 pick/25.4 mm in pick spacing with a flame retardant adhesive. The woven fabric consists of 75 denier acetate filament yarns of 97 gf in strength as warp yarns and 10's cotton yarns of 699 gf in strength as weft yarns.

### Comparative Example 1

An adhesive cloth tape was fabricated by coating a woven fabric of 0.22 mm in thickness, 71 end/25.4 mm in end spacing and 69 pick/25.4 mm in pick spacing with a flame retardant adhesive. The woven fabric consists of 30's cotton yarns of 236 gf in strength as warp yarns and 36's cotton yarns of 200 gf in strength as weft yarns.

### Comparative Example 2

An adhesive cloth tape was fabricated by coating a woven fabric of 180 end/25.4 mm in end spacing and 65 pick/25.4 mm in pick spacing with a flame retardant adhesive. The woven fabric consists of 55 denier acetate filament yarns of 72 gf in strength as warp yarns and 150 denier acetate filament yarns as weft yarns.

Samples of the Examples 1 and 2, and the Comparative examples 1 and 2 were tested for tearing easiness, noise preventing performance and flame resistance. Test results are tabulated in Table 1.

**Table 1**

| | Examples | | Comparative examples | |
|---|---|---|---|---|
| | 1 | 2 | 1 | 2 |
| Tearing easiness | Good | Good | Not good | Bad |
| Noise preventing performance | Good | Good | Good | Not good |
| Fire resistance | Good | Good | Good | Good |

As is obvious from Table 1, both Examples 1 and 2 are satisfactory in tearing easiness, noise preventing performance and flame resistance. Comparative example 1 is satisfactory in noise preventing performance and flame resistance though, its tearing easiness is unsatisfactory. Comparative example 2 is unsatisfactory in noise preventing performance, which is due to its in sufficient thickness of the base cloth. Comparative example was torn when pulled for bundling, which is due to the excessively low strength of the warp yarns of the base cloth.

## Claims

1. An adhesive cloth tape for bundling the component wires of a wiring harness, having a tensile strength of 8 kgf/19 mm or higher with respect to the direction of its length, and comprising: a woven base cloth of 0.2 mm or above in thickness, consisting of yarns having a tensile strength in the range of 80 to 200 gf as warp yarns (1), and yarns having a tensile strength higher than that of the warp yarns as weft yarns (2); and an adhesive coating (3) one major surface of the woven base cloth.

2. An adhesive cloth tape according to claim 1, wherein the yarns as weft yarns (2) are spun yarns.

3. An adhesive cloth tape according to claim 1, wherein the yarns as weft yarns (2) are texturized filament yarns.

4. An adhesive cloth tape according to any preceding claim, wherein the woven base cloth is flame retardant.

5. An adhesive cloth tape according to any one of the claims 1 to 3, wherein the adhesive (3) is flame retardant.

6. An adhesive cloth tape according to any preceding claim, wherein both the woven fabric and the adhesive (3) are flame retardant.

7. An adhesive cloth tape according to any preceding claim, wherein the warp and/or the weft yarns (1,2) are cotton yarns.

## Patentansprüche

1. Textil-Klebeband zum Bündein der Komponenten-Adern bzw. -Leitungen eines Kabelbaums, mit einer Zugfestigkeit in Längsrichtung von zumindest 8 kg/19 mm, umfassend: eine gewebte Basistextilie mit einer Dicke von zumindest 0,2 mm, bestehend aus Garnen mit einer Zugfestigkeit im Bereich von 80 bis 200 g als Kettgarne (1) und Garnen mit einer höheren Zugfestigkeit als die Kettgarne als Schußgarne (2); und eine Klebstoffbeschichtung (3) auf einer Hauptfläche der gewebten Basistextilie.

2. Textil-Klebeband nach Anspruch 1, worin die Garne als Schußgarne (2) gesponnene Garne sind.

3. Textil-Klebeband nach Anspruch 1, worin die Garne als Schußgarne (2) texturierte Filamentgarne sind.

4. Textil-Klebeband nach einem der vorhergehenden Ansprüche, worin die gewebte Basistextilie flammhemmend ist.

5. Textil-Klebeband nach einem der Ansprüche 1 bis 3, worin der Klebstoff (3) flammhemmend ist.

6. Textil-Klebeband nach einem der vorhergehenden Ansprüche, worin sowohl die gewebte Textilie als auch der Klebstoff (3) flammhemmend sind.

7. Textil-Klebeband nach einem der vorhergehenden Ansprüche, worin die Kett- und/oder Schußgarne (1, 2) Baumwollgarne sind.

## Revendications

1. Bande adhésive en tissu pour réunir les câbles constituant un faisceau de câbles, ayant une résistance à la traction de 8 kgf/19 mm ou plus relativement à la direction de sa longueur et comprenant : une étoffe tissée de base de 0,2 mm ou plus en épaisseur, constituée de fils d'une résistance à la traction dans la plage de 80 à 200 gf comme fils de chaîne (1), et de fils ayant une résistance à la traction qui est supérieure à celle des fils de chaîne comme fils de trame (2) et un revêtement adhésif (3) sur une surface majeure de l'étoffe tissée de base.

2. Bande adhésive en tissu selon la revendication 1, dans laquelle les fils utilisés comme fils de trame (2) sont des filés.

3. Bande adhésive en tissu selon la revendication 1, dans laquelle les fils utilisés comme fils de trame (2) sont des fils filamenteux texturisés.

4. Bande adhésive en tissu selon l'une des revendications précédentes, dans laquelle l'étoffe tissée de base est ignifuge.

5. Bande adhésive en tissu selon l'une des revendications 1 à 3, dans laquelle l'adhésif (3) est ignifuge.

6. Bande adhésive en tissu selon l'une des revendications précédentes, dans laquelle à la fois l'étoffe tissée et l'adhésif (3) sont ignifuges.

7. Bande adhésive en tissu selon l'une des revendications précédentes, dans laquelle les fils de chaîne et/ou de trame (1, 2) sont des fils de coton.
